# EUROPEAN PATENT APPLICATION

(11) **EP 4 552 494 A1**
(43) Date of publication of application: **14.05.2025**
(21) Application number: 24206903.7
(22) Date of filing: 16.10.2024
(51) Int. Cl.: A01M 7/00

(54) **SAFE OPERATION OF A SPRAYING APPARATUS WITH A FOLDABLE BOOM ASSEMBLY**

(30) Priority: 07.11.2023 GB 202317103
(71) Applicant: Agco do Brasil Solucoes Agricolas LTDA, Sao Paulo, 14030-680 (BR)
(72) Inventor: Delgau da Silva, Juliano, Canoas (BR); Pedrollo Soliman, Marcos, Canoas (BR)
(74) Representative: AGCO Intellectual Property Department

(57) **Abstract**

An agricultural spraying apparatus (1) for applying an agent in an agricultural field (2) having a foldable boom assembly (5) with at least one inner boom section (8, 13) and at least one outer boom section (10, 14) and a method of controlling the spraying apparatus (1) including the steps of determining a folding position of at least one inner boom section (8, 13) and preventing an application of agent by at least one nozzle (22) of the spraying apparatus (1) if the at least one inner boom section (8, 13) is in an intermediate position.

## Description

### FIELD

The present disclosure relates generally to a spraying apparatus with a foldable boom assembly for applying an agent on an agricultural field.

### BACKGROUND

U.S. Patent application 2015/0201552 A1, "Pivot Hinge Boom Spray System," published on July 23, 2015, discloses a spraying apparatus with a foldable boom assembly comprising a left and a right boom. The booms are equipped with nozzles and can be folded to reduce the size of the spraying apparatus, e. g. when driving on a public road, or unfolded to enable an application of an agent over the full length of the booms.

### BRIEF SUMMARY

It is an objective to avoid unsafe operation of a spraying apparatus. Such unsafe operations may depend on the folding status of the foldable boom assembly and may cause an unstable operation of the spraying apparatus or a collision of the foldable boom assembly against the spraying apparatus itself.

According to an aspect of the invention there is provided an agricultural spraying apparatus for applying an agent in an agricultural field comprising a central rack, a foldable boom assembly, at least one actuator, at least one nozzle for applying the agent and a control unit. The foldable boom assembly comprises a left boom with a left inner boom section pivotably attached to the central rack and a left outer boom section being relatively pivotable in connection with the left inner boom section. Analogously, the foldable boom assembly comprises a right boom with a right inner boom section pivotably attached to the central rack and a right outer boom section being relatively pivotable in connection with the right inner boom section. The at least one actuator is configured for moving each boom section between a folded and an unfolded position. The control unit is configured to determine the folding positions of the inner boom sections and to prevent an application of the agent by the at least one nozzle if at least one of the inner boom sections is in an intermediate position.

The spraying apparatus may be designed in terms of a vehicle such as a self-propelled vehicle or an implement to be towed by a vehicle such as a tractor. An operator may drive and control the spraying apparatus. For example, the operator may control the travel speed of the spraying apparatus, adjust the position of the central rack, control the folding positions of the left and right booms and control a spray function for applying an agent on crop growing in an agricultural field. The left and right booms may be folded to reduce the width of the spraying apparatus for example to avoid collisions when driving on public roads. When the spraying apparatus is located in an agricultural field, the left and right booms may be unfolded to enable an application of the agent over the full length of the foldable boom assembly. When the at least one actuator, as for example an electromechanical linear drive or a hydraulic cylinder, unfolds the foldable boom assembly, the actuator may unfold outer boom sections after the inner boom sections have been fully unfolded. Vice versa, when the at least one actuator folds the foldable boom assembly, the actuator may fold the inner boom sections after the outer boom sections have been fully folded. Thus, each inner and outer boom section is moveable between a folded or unfolded position. When an inner or outer boom section is out of the folded or unfolded position, e. g. to be moved from one to the other position, the corresponding boom section is in an intermediate position, i. e. a position other than the folded or unfolded position. The control unit may receive a sensor signal, e. g. from a contact switch, indicating that the inner boom sections are out of the folded or unfolded positions and prevent an application of the agent in response thereon. For example, the control unit may switch off the nozzles as long as the inner boom sections are in the intermediate position even if the operator of the spraying apparatus has activated the spraying function.

The spraying apparatus may comprise a central rack actuator for adjusting the height of the central rack. The control unit may be configured to prevent a lowering of the central rack if at least one of the inner boom sections is out of the unfolded position.

The central rack actuator may be an electric motor or a hydraulic cylinder. The operator may control the central rack actuator for adjusting the height. By adjusting the height of the central rack, the heights of the left and right booms are adjusted accordingly. For example, the operator may control the central rack actuator for lowering the central rack. The control unit may receive a sensor signal indicating that at least one of the inner boom sections is out of the unfolded position, i. e. in any intermediate position or folded position, and ignore the controlling of the operator for lowering the central rack in response thereon. Thus, a collision of a part of the foldable boom assembly with the vehicle can be avoided.

The control unit may be configured to limit a maximum travel speed of the spraying apparatus if at least one of the inner boom sections is in an intermediate position.

The control unit may receive a sensor signal, e. g. from a contact switch, indicating that one or both of the inner boom sections are out of the folded or unfolded positions and reduce the travel speed of the spraying apparatus according to the maximum travel speed in response thereon. For example, the control unit may override a speed command from the operator requesting a speed value higher than the limited maximum travel speed. Thus, a safe operation of the spraying apparatus can be improved.

The control unit may be configured to limit a maximum travel speed of the spraying apparatus if at least one of the outer boom sections is in an intermediate position.

The control unit may receive a sensor signal, e. g. from a contact switch, indicating that one or both of the outer boom sections are out of the folded or unfolded positions and reduce the travel speed of the spraying apparatus according to the maximum travel speed in response thereon. For example, the control unit may override a speed command from the operator requesting a speed value higher than the limited maximum travel speed. Optionally, the control unit may automatically apply a brake of the spraying apparatus for deceleration. Thus, a safe operation of the spraying apparatus can be improved.

The control unit may be configured to prevent an application of the agent by the at least one nozzle if both inner boom sections are in the unfolded position and at least one of the outer boom sections is in an intermediate position.

The control unit may receive a sensor signal, e. g. from a contact switch, indicating that both inner boom sections are in the unfolded position and that one or both of the outer boom sections are in an intermediate position. In response thereon, the control unit may prevent an application of the agent. For example, the control unit may switch off the nozzles as long as the both inner boom sections are in the unfolded position and the at least one of the outer boom sections is in an intermediate position even if the operator of the spraying apparatus has activated the spraying function.

The control unit may be configured to enable an application of the agent by the at least one nozzle if both inner boom sections are in the unfolded position and both outer boom sections are out of an intermediate position.

Thus, an application of the agent may be possible if both inner boom sections are in the unfolded position and both outer boom sections are either in the folded or unfolded position. I. e., none of the inner or outer boom sections is in an intermediate position.

The control unit may be configured to enable a maximum travel speed of the spraying apparatus if both inner boom sections are in the unfolded position and both outer boom sections are out of an intermediate position.

Thus, a movement of the spraying apparatus with unrestricted maximum travel speed may be possible if both inner boom sections are in the unfolded position and both outer boom sections are either in the folded or unfolded position. I. e., none of the inner or outer boom sections is in an intermediate position.

At least one of the both outer boom sections being out of an intermediate position may be in the unfolded position.

Thus, application of the agent and/or a movement with unrestricted maximum travel speed may also be possible if both inner boom sections are in the unfolded position and one of the both outer boom sections is in the folded position whereas the other one is in the unfolded position.

The control unit may be configured to enable an application of the agent by the at least one nozzle if all boom sections are in the folded position.

Thus, application of the agent may not be possible only when all boom sections are in the unfolded position but also for other configurations of the foldable boom assembly.

The control unit may be configured to limit a maximum travel speed of the spraying apparatus if one of the inner boom sections is in the folded position and the other inner boom section is in the unfolded position.

The control unit may receive a sensor signal, e. g. from a contact switch, indicating that one of the inner boom sections is in the folded position and the other inner boom section is in the unfolded position. In response thereon, the control unit may reduce the travel speed of the spraying apparatus according to the limited maximum travel speed similar as mentioned above. Thus, a safe operation of the spraying apparatus can be improved.

The control unit may be configured to determine an effective length of the left or right boom, limit the maximum travel speed of the spraying apparatus to a first speed limit if the effective length of the boom comprising the inner boom section in the unfolded position deceeds a length threshold, and limit the maximum travel speed of the spraying apparatus to a second speed limit if the effective length of the boom comprising the inner boom section in the unfolded position exceeds the length threshold.

The effective length may exceed the length threshold if the outer boom section of the boom comprising the inner boom section in the unfolded position is in the unfolded position.

The effective length of the left or right boom may vary in dependence of whether the outer boom sections of the left or right booms are in the folded or in the unfolded position. If the outer boom section of a boom is in the unfolded position, the effective length of the boom is longer compared to its effective length if its outer boom section is in the folded position. The length threshold may represent a length greater than the length of an inner boom section (but smaller than the length of a fully unfolded boom). Thus, a boom may exceed the length threshold if its outer boom section is unfolded and deceed the length threshold if its outer boom section is folded. The control unit may receive a sensor signal, e. g. from a contact switch, indicating whether the outer boom section of a boom is in the folded or unfolded position to determine whether the effective length of the boom exceeds the length threshold or not. Depending on whether the length threshold is exceeded by a boom or not, the control unit may limit the maximum travel speed of the spraying apparatus. The limitation of the maximum travel speed may have the same effect as already mentioned above.

The first speed limit may be higher than the second speed limit.

An exceedance of the length threshold may be considered as riskier than a shortfall of the length threshold. Thus, the control unit would enable the spraying apparatus to drive faster if the length threshold is deceeded, e. g. when the outer boom sections are in the folded position, in contrast if the length threshold is exceeded, e. g. when the outer boom sections are in the unfolded position.

The control unit may be configured to determine an effective length of the left boom and the right boom, and to prevent an application of the agent by the at least one nozzle if the effective length of the left boom is different to the effective length of the right boom.

Such a configuration may cause an unstable operation of the spraying apparatus even if nozzles of the unfolded outer boom section will be activated. The control unit may determine the effective length for each left and right boom analogously as described above. The effective length of one boom may be different to another boom if the outer boom section of the one boom is in the unfolded position and the outer boom section of the other boom is in the folded position. In response thereon, the control unit may prevent an application of the agent. For example, the control unit may switch off the nozzles as long as the effective lengths of the left and the right boom are different even if the operator of the spraying apparatus has activated the spraying function.

The left boom may comprise a left mid-boom section pivotably attached to the left inner boom section and the left outer boom section, and the right boom may comprise a right mid-boom section pivotably attached to the right inner boom section and the right outer boom section.

Thus, the effective length of the left or right boom may be adjusted by folding or unfolding of the outer boom section as well as by folding or unfolding of the mid-boom section of each left and right boom. The control unit may receive a sensor signal, e. g. from a contact switch, indicating that the mid-boom sections are out of the folded or unfolded positions.

The effective length of a boom may be less than the length threshold if the outer boom section of the boom comprising the inner boom section in the unfolded position is in the folded position and the mid-boom section of the boom comprising the inner boom section in the unfolded position is in the unfolded position.

The effective length of the left or right boom may vary in dependence of whether the mid-boom sections of the left or right booms are in the folded or in the unfolded position. If the mid-boom section of a boom is in the unfolded position, the effective length of the boom may be longer compared to its effective length if its mid-boom section is in the folded position. The length threshold may represent a length greater than the length of an inner boom section (but smaller than the length of the sum of the lengths of the inner and mid-boom sections of a boom). Thus, a boom may exceed the length threshold if its mid-boom section is unfolded and deceed the length threshold if its mid-boom section is folded. Alternatively, the length threshold may represent a length greater than the sum of the length of the inner boom section and the mid-boom section (but smaller than the length of a fully unfolded boom). Thus, a boom may exceed the length threshold if its mid-boom section and outer boom section are unfolded and deceed the length threshold if its outer boom section is folded. Depending on whether the length threshold is exceeded by a boom or not, the control unit may limit the maximum travel speed of the spraying apparatus or prevent an application of an agent by the nozzles.

The at least one nozzle may be attached to one of the outer boom sections.

Additional nozzles may be attached to one of the mid-boom sections and/or the inner boom sections, too. When a nozzle is activated, agent is applied to the agricultural field. The agent may be any pesticide or fertilizer, for example.

Another aspect includes a method of controlling a spraying apparatus. The method comprises steps for determining a folding position of at least one inner boom section of the spraying apparatus, and preventing an application of agent by at least one nozzle of the spraying apparatus if the at least one inner boom section is in an intermediate position.

The method may comprise steps for checking whether both inner boom sections are in the unfolded position and preventing a lowering of the central rack if at least one of the inner boom sections is out of unfolded position.

Thus, a collision of one of the booms with a part of the spraying apparatus can be avoided.

The method may comprise a step for checking whether the effective length of one of the booms exceeds a length threshold if the effective lengths of the left or right booms are different.

The method may further comprise a step for enabling an application of the agent by the at least one nozzle if the effective lengths of both booms deceed the length threshold and a step for preventing an application of the agent by the at least one nozzle if the effective length of one of the booms exceeds the length threshold.

The method may additionally comprise a step for restricting the maximum travel speed of the spraying apparatus to a first speed limit if at least one boom section is out of the folded position.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

Several aspects of the invention will now be described, by way of example only, with reference to the accompanying drawings, in which:
FIG. 1 illustrates a spraying apparatus in terms of a vehicle.
FIG. 2 illustrates a spraying apparatus in terms of an implement to be towed by an agricultural vehicle.
FIG. 3 illustrates a simplified block diagram of the spraying apparatus.
FIG. 4 illustrates a simplified view of a control unit of the spraying apparatus.
FIG. 5 illustrates a flow chart of a method executable by the control unit of FIG. 4.
FIG. 6A illustrates the spraying apparatus with a foldable boom assembly in a folded position.
FIG. 6B illustrates the spraying apparatus with inner boom sections in an intermediate position.
FIG. 6C illustrates the spraying apparatus with inner boom sections in an unfolded position.
FIG. 6D illustrates the spraying apparatus with inner boom sections in an unfolded position and outer boom sections in an intermediate position.
FIG. 6E illustrates the spraying apparatus with a boom in the folded position and another boom with an unfolded inner boom section.
FIG. 6F illustrates the spraying apparatus with a boom in the folded position and another boom in the unfolded position.

### DETAILED DESCRIPTION

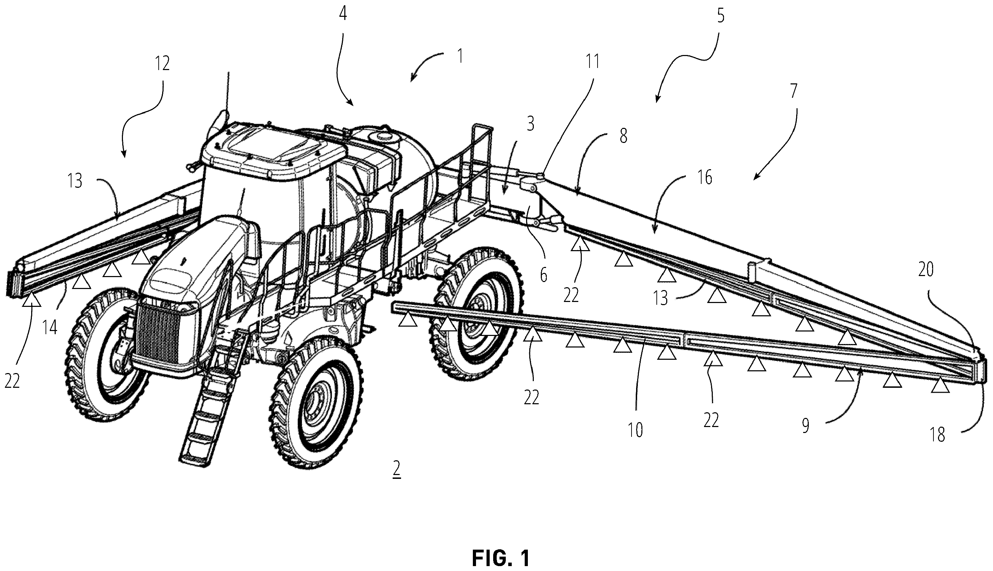

FIG. 1 shows a spraying apparatus 1 on an agricultural field 2. Such an apparatus is disclosed in patent application US 2015/0201552 A1, entitled "Pivot Hinge Boom Spray System", published on July 23, 2015, which is hereby incorporated by reference in its entirety. The spraying apparatus 1 comprises a central rack 3, a foldable boom assembly 5 and actuators 11 and 18. The foldable boom assembly 5 comprises a foldable left boom 7 and a foldable right boom 12. In FIG. 1, the right boom 12 is in a folded position, whereas the left boom 7 is unfolding. Left boom 7 and right boom 12 are designed as a crane arm 16. Left boom 7 comprises a left inner boom section 8 pivotally connected with the central rack 3 by means of a joint 6. The actuator 11 is configured to apply a torque on the left inner boom section 8 for folding or unfolding of the left inner boom section 8. The actuator may be a hydraulic actuator or an electromechanical actuator. A left outer boom section 10 is pivotally connected to the left inner boom section 8 by means of a joint 20. The actuator 18 is configured to apply a torque on the left outer boom section 10 for folding or unfolding of the left outer boom section 10. Optionally, a left mid-boom section 9 may be integrated between the left inner boom section 8 and the left outer boom section 10 for providing an additional foldable section of the left boom 7.

Analogously to the left boom 7, the right boom 12 comprises a right inner boom section 13 pivotally connected with the central rack 3. A right outer boom section 14 is pivotally connected to the right inner boom section 13. The right inner boom section 13 and the right outer boom section 14 are also controllable by actuators for folding or unfolding the inner and outer boom sections 13 and 14.

The central rack 3 comprises a central rack actuator 4 for adjusting the height of the central rack 3 and the left and right booms 7 and 12 connected with the central rack 3. Thus, a distance between the booms 7, 12 and the agricultural field 2 can be adjusted. The central rack actuator 4 may be a hydraulic or an electromechanical actuator.

The boom sections of the left and right booms 7 and 12 are equipped with nozzles 22. When the nozzles 22 are active, an agent such as a pesticide or a fertilizer can be sprayed on the agricultural field 2.

As shown in FIG. 1, the spraying apparatus 1 is designed as a vehicle. The vehicle may be a self-propelled vehicle. Optionally, an operator may take control of the spraying apparatus 1 for steering the vehicle and controlling the travel speed of the spraying apparatus 1. The operator may also control the central rack 3 for adjusting the height or the foldable boom assembly 5 for folding or unfolding the left and right booms 7 and 12. The operator may also switch on or off the nozzles 22 for applying the agent on the agricultural field 2.

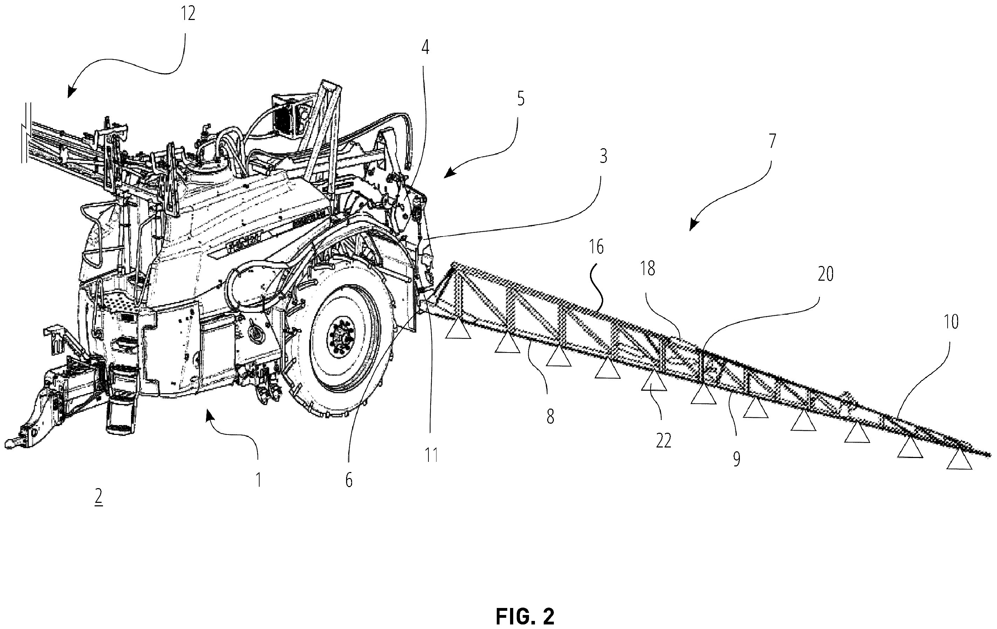

Alternatively to the spraying apparatus 1 as shown in FIG. 1, the spraying apparatus 1 may be designed as an implement as shown in FIG. 2 that may be towed by a towing vehicle, such as a tractor for example, to be moved through the agricultural field 2. But the spraying functionality and the spray assembly may be the same. Thus, the spraying apparatus 1 of FIG. 1 and FIG. 2 have several components in common such as the central rack 3, the foldable boom assembly 5 with the left and right booms 7 and 12 with the inner and outer boom sections 8, 10, 13, 14 and the actuators 11 and 18 for adjusting the foldable boom assembly 5. As can be seen in FIG. 1 and FIG. 2, the same reference numerals are assigned to components that both designs have in common.

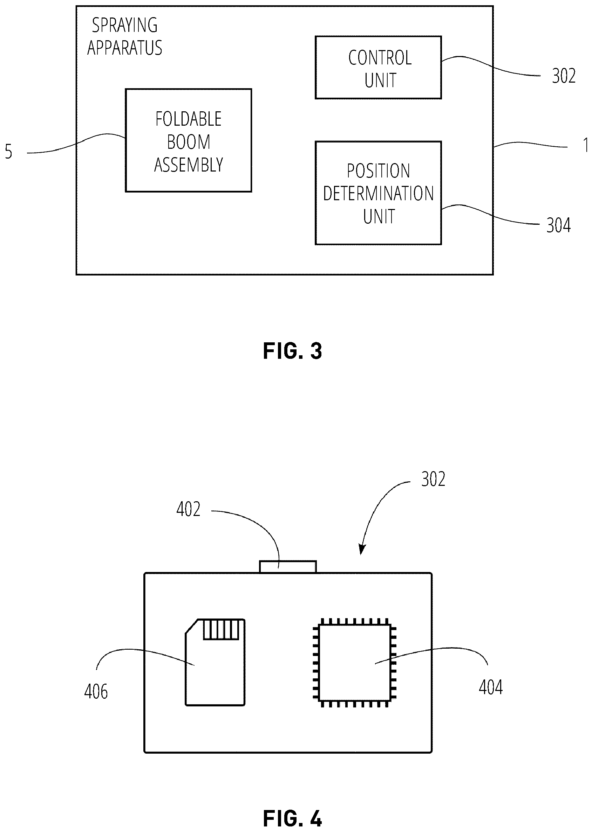

FIG. 3 illustrates a simplified schematic block diagram of the spraying apparatus 1. The spraying apparatus 1 may be designed as a vehicle as shown in FIG. 1 or as an implement as shown in FIG. 2. In addition to the foldable boom assembly 5, the spraying apparatus 1 comprises a control unit 302 as shown in FIG. 4 and a position determination unit 304.

The position determination unit 304 provides position and time signals for determining an absolute position of the spraying apparatus 1 at a specific point of time. The position determination unit 304 may be an inertial measurement unit (IMU) and/or a global navigation satellite system (GNSS) receiver receiving position and time signals from a GNSS such as GPS or Galileo. The IMU may provide additional orientation information about the orientation and movement of the spraying apparatus 1 for improving the accuracy of the position estimation and the reference points of the GNSS receiver. Based on received position and time signals, the spraying apparatus 1 can move autonomously along a travel path.

FIG. 4 shows the control unit 302 comprising an interface 402, a controller 404 and a memory 406. The control unit 302 may receive and send signals or data via the interface 402. The interface 402 may be a wireless interface or a connector. The controller 404 may store the data or signals received by the control unit 302 in the memory 406. The memory 406 may contain additional data or executable computer program products, for example in terms of a computer-implemented method, that may be retrieved, processed or executed by the controller 404. Data or signals resulting from the processing of data or signals or from the execution of a computer program product may be stored to the memory 406 or sent to the interface 402 by the controller 404. The controller 404 is configured to control the central rack actuator 4, the actuators 11, 18 for (un-)folding of the booms 7, 12 and each nozzle 22.

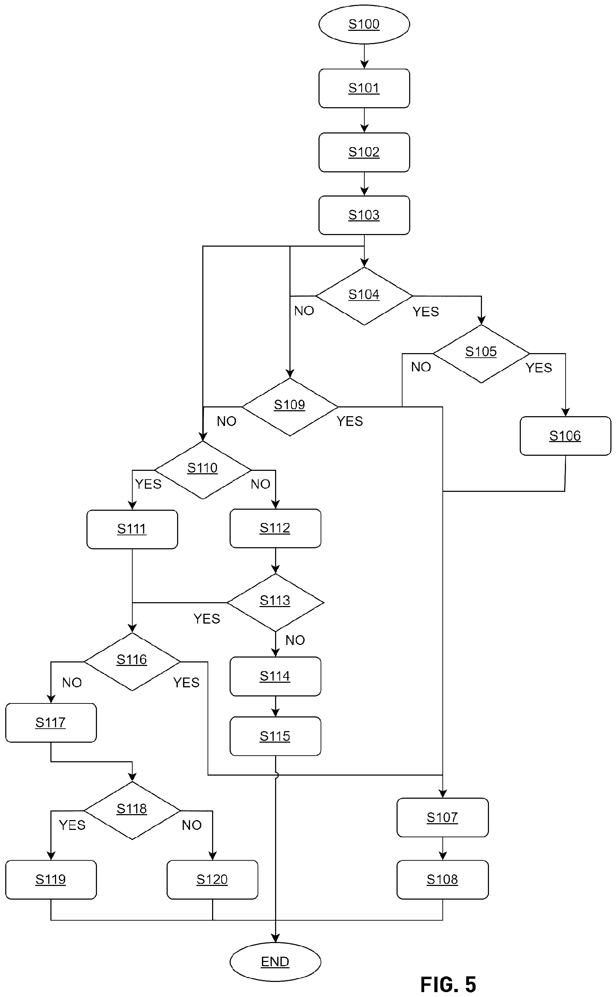

FIG. 5 shows a flow chart of a method for controlling the spraying apparatus 1. The method may be at least partly a computer-implemented method stored as a computer program product in the memory 406 of the control unit 302. The control unit 302 is configured to carry out the method. Computer-implemented parts of the method may be executed by the controller 404 of the control unit 302. Non-computer-implemented parts of the method may be executed manually or by other components of the spraying apparatus 1. The method is described by way of example of several steps without any restriction in respect of that steps. I. e. the number or the order of steps may be adapted, for example single steps may be excluded and/or added and executed earlier or later than described.

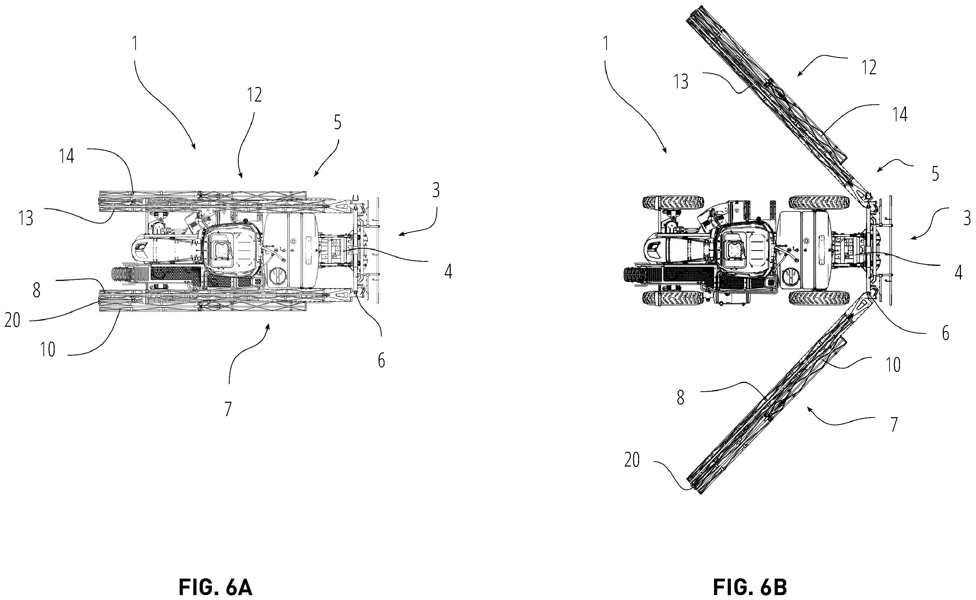

In the following, the method and other aspects of the invention will be explained by way of example of FIG. 6A to FIG. 6F showing the spraying apparatus 1 designed as a vehicle as shown in FIG. 1. But the same applies to the spraying apparatus 1 designed as an implement as shown in FIG. 2. The method starts with step S100 and proceeds to step S101.

At step S101, the control unit 302 determines the folding positions of the left inner boom section 8 and the right inner boom section 13 of the foldable boom assembly 5. The left and right inner boom sections 8, 13 may be in a folded position, in an unfolded position or in an intermediate position therebetween.

The method proceeds to step S102 and the control unit 302 determines the folding positions of the left outer boom section 10 and the right outer boom section 14 of the foldable boom assembly 5. In case of any mid-boom sections, such as left mid-boom section 9, the control unit 302 also determine its folding position. The outer and mid-boom sections 9, 10, 14 may be also in a folded position, in an unfolded position or in an intermediate position therebetween. A corresponding sensor, such as an angle sensor or a contact switch, may be attached to each boom section to sense the folding position of each boom section and to send a corresponding signal to the control unit 302. For example, a first contact switch may be activated if the left inner boom section 8 is in the folded position and a second contact switch may be activated if the left inner boom section 8 is in the unfolded position. Both contact switches may be deactivated if the left inner boom section 8 is in an intermediate position.

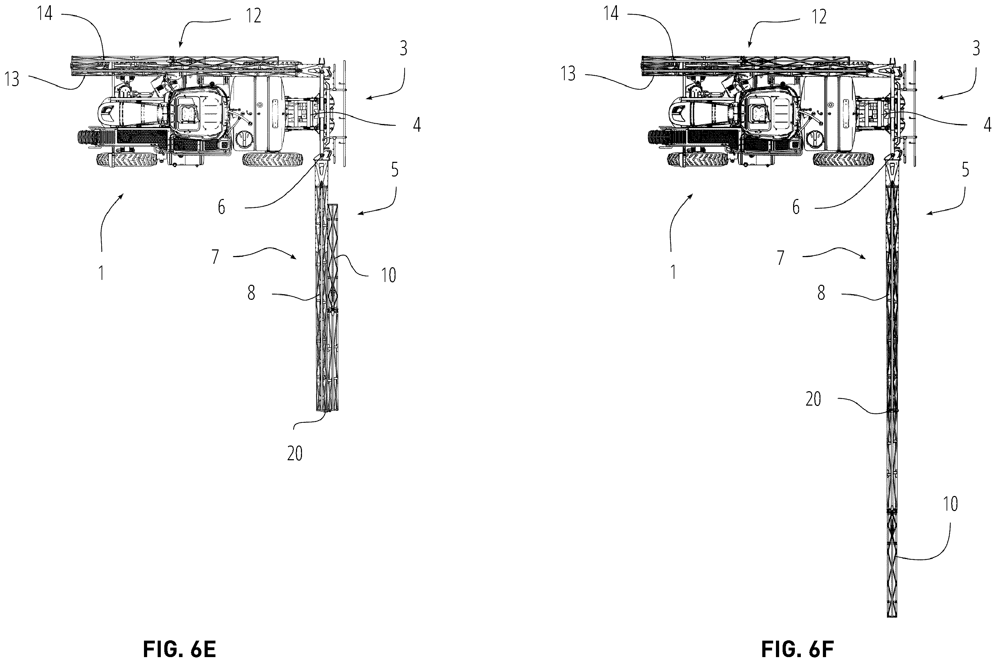

The method proceeds to step S103 and the control unit 302 determines the effective length of the left boom 7 and the right boom 12. The effective length of a boom depends on the folding positions of its boom sections. The effective length of a boom is the greatest if all boom sections of the boom are in the unfolded position. Then, the effective length of the boom corresponds to the total length of the boom. As exemplarily can be seen in FIG. 6F, the left boom 7 is completely unfolded so that the effective length of the left boom 7 corresponds to the total length of the left boom 7. The effective length will be reduced if the outer boom section and/or the mid-boom section of a boom will be moved in the folded position. Then, the effective length of the boom extends to a joint of the folded boom section only. As exemplarily can be seen in FIG. 6E, the left outer boom section 10 of the left boom 7 is in the folded position so that the effective length of the left boom 7 is shorter compared to the effective length of the unfolded left boom 7 of FIG. 6F and corresponds to the length of the left inner boom section 8 extending to the joint 20.

The effective length of each boom section is stored in the memory 406 of the control unit 302. Thus, the control unit 302 can determine the effective length of the left and the right boom 7 and 12 depending on their folding positions. Then, the method proceeds to step S104, S109 or S110.

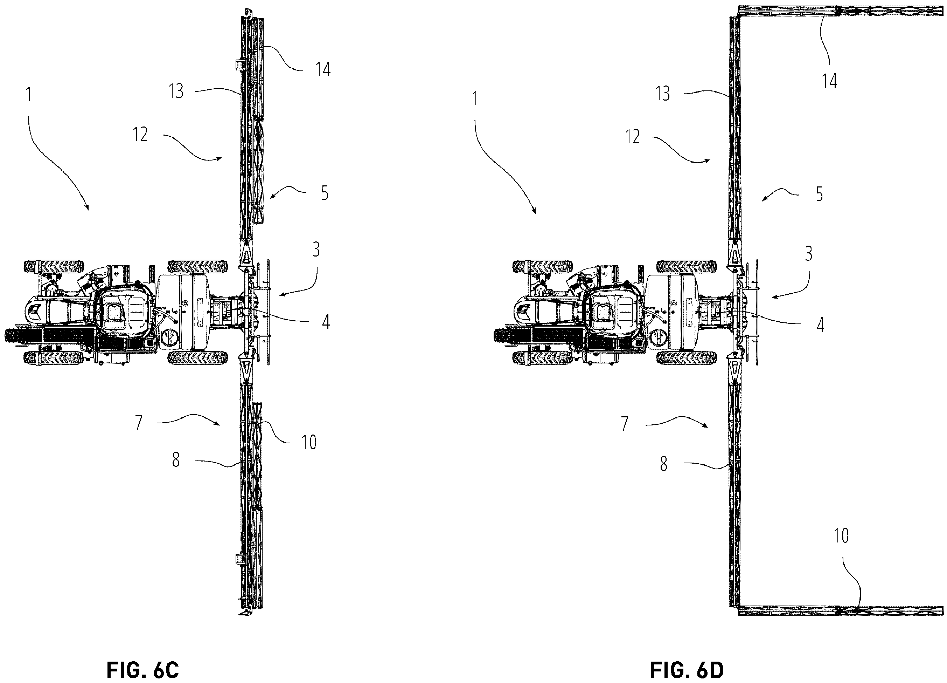

At step S104, the control unit 302 checks the condition whether at least one outer boom section is in the intermediate position as exemplarily illustrated in FIG. 6D. If so, the method proceeds to step S105. Otherwise, the method proceeds to step S109.

At step S105, the control unit 302 checks whether at least one of the inner boom sections 8 and 13 is in the folded position as exemplarily illustrated in FIG. 6A, FIG. 6E and FIG. 6F. If so, the method proceeds to step S106. Otherwise, the method proceeds to step S107.

At step S106, the control unit 302 prevents a lowering of the central rack 3. Due to a folded left inner boom section 8 (as shown in FIG. 6A) or a folded right inner boom section 13 (as shown in FIG. 6A, FIG. 6E and FIG. 6F), the left boom 7 or right boom 12 may collide against any part of the spraying apparatus 1 if the height of the left or right boom 7, 12 is adjusted. The height of the left and right booms 7 and 12 may be adjusted by an adjustment of the height of the central rack 3. Thus, a lowering of the central rack 3 is prevented. As long as the control unit 302 prevents a lowering of the central rack 3, any control demands for lowering the height of the central rack 3 received from an operator of the spraying apparatus 1 may be ignored by the control unit 302. Then, the methods proceeds to step S107.

At step S107, the control unit 302 prevents an application of agent by the at least one nozzle 22. The control unit 302 may switch off the at least one nozzle 22 or ignore a spray demand commanded by the operator as long as the application of the agent shall be prevented. Thus, the at least one nozzle 22 would not apply any agent even if the operator of the spraying apparatus 1 would demand spraying of the agent. Then, the method proceeds to step S108.

At step S108, the control unit 302 limits the maximum travel speed of the spraying apparatus 1 to a second speed limit being lower than a first speed limit. The second speed limit may be equal to or less than the half of the value of the first speed limit and may be about 5 km/h for example. If the operator demands a travel speed higher than the second speed limit, the control unit 302 avoids an acceleration of the spraying apparatus 1 over the second speed limit. For example, the control unit 302 may override a speed command from the operator requesting a speed value higher than the limited maximum travel speed. After step S108, the method may end.

At step S109, the control unit 302 checks the condition whether at least one left inner boom section 8, 13 is in the intermediate position as exemplarily illustrated in FIG. 6B. If so, the method proceeds to step S107 (see description above). Otherwise, the method proceeds to step S110.

At step S110, the control unit 302 checks whether at least one of the inner boom sections 8 and 13 is in the folded position as exemplarily illustrated in FIG. 6A, FIG. 6E and FIG. 6F. If so, the method proceeds to step S111. Otherwise, the method proceeds to step S112.

At step S111, the control unit 302 prevents a lowering of the central rack 3. Due to a folded left inner boom section 8 or a folded right inner boom section 13, the left boom 7 or right boom 12 may collide against any part of the spraying apparatus 1 if the height of the left or right boom 7, 12 is adjusted. The height of the left and right booms 7 and 12 may be adjusted by an adjustment of the height of the central rack 3. Thus, a lowering of the central rack 3 is prevented. As long as the control unit 302 prevents a lowering of the central rack 3, any control demands for lowering the height of the central rack 3 received from an operator of the spraying apparatus 1 may be ignored by the control unit 302. Then, the methods proceeds to step S116.

At step S112, the control unit 302 may enable a lowering of the central rack 3. A collision of the left or right boom 7, 12 with any part of the spraying apparatus 1 may not be expected since both inner boom sections 8 and 13 are out of the folded position. Thus, the operator may adjust the height of the central rack 3 according to his demand wherein the height of the left and right booms 7 and 12 are adjusted accordingly. Then, the method proceeds to step S113.

At step S113, the control unit 302 checks whether the effective lengths of the left and right booms 7 and 12 determined by method step S103 are different as exemplarily shown in FIG. 6F, or not as exemplarily shown in FIG. 6C. If so, the method proceeds to step S116. Otherwise, the method proceeds to step S114.

At step S114, the control unit 302 enables an application of the agent. Thus, the at least one nozzle 22 may spray agent on the agricultural field 2 as demanded by the operator. The control units 302 may control the at least one nozzle 22 for applying the agent accordingly and may not ignore the spray demand any more. Then, the method proceeds to step S115.

At step S115, the control unit 302 cancels any limitation of the maximum travel speed of the spraying apparatus 1. Thus, the spraying apparatus 1 may be driven with full speed without any speed limitation. The control unit 302 may adjust the travel speed of the spraying apparatus 1 as demanded by the operator. Depending on the speed demand of the operator, the spraying apparatus 1 may drive faster than the first or second speed limit. After step S115, the method may end.

At step S116, the control unit 302 checks whether the effective length of at least one of the booms 7 or 12 is greater than a length threshold. The length threshold may represent a length greater than the length of an inner boom section (but smaller than the length of a fully unfolded boom). Thus, the left boom 7 may exceed the length threshold if its left outer boom section 10 is unfolded and deceed the length threshold if its left outer boom section 10 is folded and the right boom 12 may exceed the length threshold if its right outer boom section 14 is unfolded and deceed the length threshold if its right outer boom section 14 is folded. Thus, the control units 302 can determine an exceedance or shortfall of a length threshold by a boom in dependence of the folding position of the corresponding boom as determined in the method steps S101 and S102. The length threshold may be a predefined, adjustable parameter saved in the memory 406 of the control unit 302. For the case that a boom comprises a mid-boom section, such as the left mid-boom section 9, it depends on the value of the length threshold whether the length threshold is exceed or deceeded when the mid-boom section is unfolded. If the effective length of boom 7 or 12 exceeds the length threshold, the method proceeds to step S107 (see description above). Otherwise, the method proceeds to step S117.

At step S117, the control unit 302 enables an application of the agent. Thus, the at least one nozzle 22 may spray agent on the agricultural field 2 as demanded by the operator. The control units 302 may control the at least one nozzle 22 for applying the agent accordingly and may not ignore the spray demand any more. Then, the method proceeds to step S118.

At step S118, the control unit 302 checks whether all boom sections are in the folded position as exemplarily shown in FIG. 6A. If so, the method proceeds to step S119. If not, the method proceeds to step S120.

At step S119, the control unit 302 cancels any limitation of the maximum travel speed of the spraying apparatus 1. Thus, the spraying apparatus 1 may be driven with full speed without any speed limitation. The control unit 302 may adjust the travel speed of the spraying apparatus 1 as demanded by the operator. Depending on the speed demand of the operator, the spraying apparatus 1 may drive faster than the first or second speed limit. After step S119, the method may end.

At step S120, the control unit 302 limits the maximum travel speed of the spraying apparatus 1 to a first speed limit being higher than the second speed limit. The first speed limit may be equal to or higher than the triple of the value of the second speed limit and may be about 15 km/h for example. If the operator demands a travel speed higher than the first speed limit, the control unit 302 avoids an acceleration of the spraying apparatus 1 over the first speed limit. For example, the control unit 302 may override a speed command from the operator requesting a speed value higher than the limited maximum travel speed. After step S120, the method may end.

Finally, the different restrictions for the folding configurations of the booms 7 and 12 as shown in FIG. 6A to FIG. 6F set by the control unit 302 when executing the method may be summarized as follows:

In case of a folding configuration of the booms 7 and 12 according to FIG. 6A, the control unit 302 enables spraying of the agent by the at least one nozzle 22, enables maximum travel speed without limitation but prevents a lowering of the central rack 3.

In case of a folding configuration of the booms 7 and 12 according to FIG. 6B, the control unit 302 prevents an application of the agent by the at least one nozzle 22, limits the maximum travel speed to the second speed limit and prevents a lowering of the central rack 3.

In case of a folding configuration of the booms 7 and 12 according to FIG. 6C, the control unit 302 enables spraying of the agent by the at least one nozzle 22, enables maximum travel speed without limitation and enables a lowering of the central rack 3.

In case of a folding configuration of the booms 7 and 12 according to FIG. 6D, the control unit 302 prevents an application of the agent by the at least one nozzle 22, limits the maximum travel speed to the second speed limit but enables a lowering of the central rack 3.

In case of a folding configuration of the booms 7 and 12 according to FIG. 6E or FIG. 6F, the control unit 302 prevents a lowering of the central rack 3. Additionally, the control unit 302 enables spraying of the agent by the at least one nozzle 22 and limits the maximum travel speed to the first speed limit if the effective length of the booms 7 and 12 do not exceed the length threshold. But if the effective length of boom 7 or 12 exceeds the length threshold, the control unit 302 prevents an application of the agent by the at least one nozzle 22 and limits the maximum travel speed to the second speed limit.

All references cited herein are incorporated herein in their entireties. If there is a conflict between definitions herein and in an incorporated reference, the definition herein shall control.

**LISTING OF DRAWING ELEMENTS**

| | | | |
|---|---|---|---|
| 1 | spraying apparatus | 2 | agricultural field |
| 5 | foldable boom assembly | | |
| 3 | central rack | | |
| 6 | joint | | |
| 7 | left boom | | |
| 8 | left inner boom section | | |
| 9 | left mid-boom section | | |
| 10 | left outer boom section | | |
| 11 | actuator | | |
| 12 | right boom | | |
| 13 | right inner boom section | | |
| 14 | right outer boom section | | |
| 16 | crane arm | | |
| 18 | actuator | | |
| 20 | joint | | |
| 22 | nozzle | | |
| 4 | central rack actuator | | |
| 302 | control unit | | |
| 304 | position determination unit | | |
| 402 | interface | | |
| 404 | controller | | |
| 406 | memory | | |

## Claims

1. An agricultural spraying apparatus (1) for applying an agent in an agricultural field (2), comprising:
a central rack (3);
a foldable boom assembly (5) comprising
a left boom (7) with
a left inner boom section (8) pivotably attached to the central rack (3); and
a left outer boom section (10) being relatively pivotable in connection with the left inner boom section (8); and
a right boom (12) with
a right inner boom section (13) pivotably attached to the central rack (3);
a right outer boom section (14) being relatively pivotable in connection with the right inner boom section (13);
the spraying apparatus (1) further comprising
at least one actuator (11, 18) for moving each boom section (8, 10, 13, 14) between a folded and an unfolded position;
at least one nozzle (22) for applying the agent; and
a control unit (302) configured to
determine the folding positions of the inner boom sections (8, 13); and
prevent an application of the agent by the at least one nozzle (22) if at least one of the inner boom sections (8, 13) is in an intermediate position.

2. The spraying apparatus (1) of claim 1, comprising
a central rack actuator (4) for adjusting the height of the central rack (3); wherein
the control unit (302) is configured to prevent a lowering of the central rack (3) if at least one of the inner boom sections (8, 13) is out of the unfolded position.

3. The spraying apparatus (1) of claim 1 or 2, wherein the control unit (302) is configured to
limit a maximum travel speed of the spraying apparatus (1) if:
at least one of the inner boom sections (8, 13) is in an intermediate position; and/or
at least one of the outer boom sections (10, 14) is in an intermediate position.

4. The spraying apparatus (1) of any one of claims 1 to 3, wherein the control unit (302) is configured to:
prevent an application of the agent by the at least one nozzle (22) if both inner boom sections (8, 13) are in the unfolded position and at least one of the outer boom sections (10, 14) is in an intermediate position; and/or
enable an application of the agent by the at least one nozzle (22) if both inner boom sections (8, 13) are in the unfolded position and both outer boom sections (10, 14) are out of an intermediate position.

5. The spraying apparatus (1) of any one of claims 1 to 4, wherein the control unit (302) is configured to
enable a maximum travel speed of the spraying apparatus (1) if both inner boom sections (8, 13) are in the unfolded position and both outer boom sections (10, 14) are out of an intermediate position.

6. The spraying apparatus (1) of claim 4 or 5, wherein at least one of the both outer boom sections (10, 14) being out of an intermediate position is in the unfolded position.

7. The spraying apparatus (1) of any one of claims 1 to 6, wherein the control unit (302) is configured to
enable an application of the agent by the at least one nozzle (22) if all boom sections (8, 10, 13, 14) are in the folded position.

8. The spraying apparatus (1) of any one of claims 1 to 7, wherein the control unit (302) is configured to
limit a maximum travel speed of the spraying apparatus (1) if one of the inner boom sections (8, 13) is in the folded position and the other inner boom section is in the unfolded position.

9. The spraying apparatus (1) of claim 8, wherein the control unit (302) is configured to
determine an effective length of the left or right boom (7, 12);
limit the maximum travel speed of the spraying apparatus (1) to a first speed limit if the effective length of the boom comprising the inner boom section in the unfolded position deceeds a length threshold; and
limit the maximum travel speed of the spraying apparatus (1) to a second speed limit if the effective length of the boom comprising the inner boom section in the unfolded position exceeds the length threshold.

10. The spraying apparatus (1) of claim 9, wherein the first speed limit is higher than the second speed limit.

11. The spraying apparatus (1) of claim 9 or 10, wherein the effective length exceeds the length threshold if the outer boom section of the boom comprising the inner boom section in the unfolded position is in the unfolded position.

12. The spraying apparatus (1) of any one of the preceding claims, wherein the control unit (302) is configured to
determine an effective length of the left boom (7) and the right boom (12); and
prevent an application of the agent by the at least one nozzle (22) if the effective length of the left boom (7) is different to the effective length of the right boom (12).

13. The spraying apparatus (1) of any one of the preceding claims, wherein
the left boom (7) comprises
a left mid-boom section (9) pivotably attached to the left inner boom section (8) and the left outer boom section (10); and
the right boom (12) comprises
a right mid-boom section pivotably attached to the right inner boom section (13) and the right outer boom section (14).

14. The spraying apparatus (1) of claim 13, when referring back to any one of claims claim 9 to 12, wherein the effective length is less than the length threshold if the outer boom section of the boom comprising the inner boom section in the unfolded position is in the folded position and the mid-boom section of the boom comprising the inner boom section in the unfolded position is in the unfolded position.

15. A method of controlling a spraying apparatus (1) comprising:
Determining a folding position of at least one inner boom section (8, 13) of the spraying apparatus (1); and
preventing an application of agent by at least one nozzle (22) of the spraying apparatus (1) if the at least one inner boom section (8, 13) is in an intermediate position.
